# EUROPÄISCHE PATENTSCHRIFT

(11) **EP 1 216 368 B1**
(45) Veröffentlichungstag und Bekanntmachung des Hinweises auf die Patenterteilung: **26.02.2003**
(21) Anmeldenummer: 00967671.9
(22) Anmeldetag: 14.09.2000
(51) Int. Cl.: F16H 59/02

(54) **STEUERUNG EINES AUTOMATISCHEN ODER AUTOMATISIERTEN GETRIEBES ÜBER SPRACHEINGABE**
CONTROL OF AN AUTOMATIC OR AUTOMATED GEARBOX USING VOICE COMMAND
SYSTEME POUR COMMANDER UNE BOITE DE VITESSES AUTOMATIQUE OU AUTOMATISEE, PAR L'INTERMEDIAIRE D'UNE COMMANDE VOCALE

(30) Priorität: 29.09.1999 DE 19946559
(43) Veröffentlichungstag der Anmeldung: 26.06.2002
(73) Patentinhaber: ZF FRIEDRICHSHAFEN Aktiengesellschaft, 88038 Friedrichshafen (DE)
(72) Erfinder: SCHWAB, Manfred, 88069 Tettnang (DE); RONGE, Ludger, 88097 Eriskirch (DE)
(86) Internationale Anmeldenummer: EP0008964
(87) Internationale Veröffentlichungsnummer: WO01023781

(56) Entgegenhaltungen:
- DE-A- 19 650 770
- DE-A- 19 738 747

## Beschreibung

Die Erfindung betrifft die Steuerung einer automatisch oder automatisiert ausgeführten Schaltung in einem Fahrzeugwechselgetriebe nach dem Oberbegriff des Anspruchs 1.

Automatische oder automatisierte Schaltgetriebe von Fahrzeugen schalten üblicherweise nach vorgegebenen Schaltprogrammen, die verschiedene Parameter des jeweiligen Fahrzeugzustandes und Fahreranforderungen in die Berechnung eines angemessenen Übersetzungsverhältnisses des Getriebes einfließen lassen. Bevorstehende Fahrsituationen und Einflüsse aus der Verkehrssituation auf das Fahrzeug können die verschiedenen Parameter erzeugenden Sensoren nicht erfassen und damit einer Berechnung auch nicht zugrundelegen. In verschiedenen Situationen ist der aktive Eingriff des Fahrers erforderlich, weil er die Fahrzeugsituation, die Verkehrssituation, den Straßenzustand oder die Besonderheiten der Topographie besser beurteilen kann.

Somit kann es zu Situationen kommen, in denen das Getriebe schaltet, die aber unpassend und für den Fahrer unangenehm sind. Dabei kann das Getriebe zu einem für den Fahrer unvorhersehbaren Zeitpunkt schalten oder es kann auch ein unvorhersehbar großer Gangwechsel durchgeführt werden, der der bestehenden Verkehrssituation oder Topographie nicht angemessen ist.

Aus der DE 196 50 770 Al ist beispielgebend für automatische Getriebe bekannt, die Steuerung und damit die Verstellung des Bedienhebels für verschiedene Schaltmodi des Getriebes über eine Sprachsteuerung vorzunehmen. Dabei wird das normalerweise manuelle Einlegen eines Schaltmodus bei einem automatischen Getriebe durch die Spracheingabe ersetzt, d.h. der eingelegte Schaltmodus eines automatischen Getriebes wird durch Sprachsteuerung geändert, nicht der Wechsel eines Übersetzungsverhältnisses innerhalb des Getriebes. Welches Übersetzungsverhältnis in dem jeweiligen Schaltmodus geschaltet wird bleibt nach wie vor der Getriebesteuerung des automatischen Getriebes überlassen.
Ein derartiges Verstellen des gewünschten Schaltmodus geschieht auch nur in wenigen Situationen des Fahrzeugbetriebes, denn wie bei einem automatischen Getriebe üblich, werden die verschiedenen Schaltmodi in der Regel im Fahrzeugstillstand eingelegt (Vorwärts, Rückwärts, Parken etc.) und dann während des Fahrbetriebs in dem jeweiligen Schaltmodus nicht mehr geändert. Die Wahl des richtigen Übersetzungsverhältnisses im jeweiligen Schaltmodus bleibt dann der Getriebesteuerung überlassen. Dem Fahrer bleibt lediglich überlassen, welchen Schaltmodus er über die Spracheingabe wählt. Eine Änderung des geschalteten Übersetzungsverhältnisses ist dabei kaum möglich und eine fahrsituationsbezogene Änderung ist gar nicht möglich.

Der Erfindung liegt die Aufgabe zugrunde, bei einem automatisch oder automatisiert schaltenden Getriebe einen fahrsituationsbezogenen Wechsel des Übersetzungsverhältnisses im Getriebe zu unterstützen.

Die Aufgabe wird gelöst durch eine Vorrichtung mit den Merkmalen des Anspruchs 1 und einem Verfahren nach Anspruch 10. Ausgestaltungen sind Gegenstand von Unteransprüchen.

Bei einer Vorrichtung zum Schalten eines automatischen oder automatisierten Fahrzeugwechselgetriebes mit einer Einrichtung zur Spracheingabe durch den Fahrer, in der die vom Fahrer eingegebenen Sprachbefehle mit in einem Speicher abgelegten Referenz-Sprachbefehlen verglichen werden und daraus Steuersignale gebildet werden, werden in einer Getriebesteuerung des Fahrzeugwechselgetriebes die aus den Sprachbefehlen des Fahrers gebildeten Steuersignale den von der Getriebesteuerung errechneten Schaltsignalen überlagert, um daraus einen situationsgerechten Schaltbefehl für das Fahrzeugwechselgetriebe zu bilden. Dadurch kann der Fahrer das Fahrzeug fahrzeugbezogen, verkehrssituationsbezogen oder auch topographiebezogen richtig steuern. In einer vorteilhaften Ausgestaltung sind über die Einrichtung zur Spracheingabe die Anzahl der Gangsprünge beim Wechsel des Übersetzungsverhältnisses sowohl beim Hochschalten als auch beim Zurückschalten einzugeben und in einer weiteren Ausgestaltung sind spezielle Fahrprogramme wie ökonomische oder sportliche Programme oder Winterprogramme einzugeben. In einer Ausgestaltung ist über die Einrichtung zur Spracheingabe das Kriechen des Fahrzeugs zu unterdrücken. In einer vorteilhaften Ausgestaltung ist durch die Einrichtung zur Spracheingabe der Befehl, das aktuell eingelegte Übersetzungsverhältnis zu halten, einzugeben oder in einer Ausgestaltung ist eine gewünschte Anfahrübersetzung entsprechend der aktuellen Beladung oder Steigung, an der das Fahrzeug steht, einzugeben.
Eine weitere Ausgestaltung zeigt für die Einrichtung zur Spracheingabe eine Vorrichtung, die für den Fahrer leicht zugänglich ist und mit der die Benutzung der Einrichtung zur Spracheingabe freigegeben wird. Bei einer Ausgestaltung wird die Benutzung für eine vorbestimmbare Zeitspanne freigegeben und in einer Ausgestaltung ist die Vorrichtung während der Fahrt ausschließlich für den Fahrer selbst zugänglich ausgebildet.

Eine bevorstehende Verkehrssituation, wie eine die Durchfahrt versperrende Verkehrslichtzeichenanlage, das Ende eines Staus, ein Bahnübergang oder ein Fußgängerüberweg werden vom Fahrer mit seinen Sinnesorganen erkannt. Das Gleiche gilt für das Erkennen einer bevorstehenden Steigung nach einer längeren Fahrt auf ebener Strecke oder das Erreichen der Talsohle nach längerer Bergabfahrt, möglicherweise unter Einsatz zusätzlicher Bremseinrichtungen des Fahrzeugs. Der gegebene Straßenzustand insbesondere auch in Folge von Witterungseinflüssen spielt für das zu schaltende Übersetzungsverhältnis gleichsam eine wichtige Rolle. Ebenfalls kann die bevorstehende Situation eine Schaltung über mehrere Gangstufen erfordern oder, im Gegensatz dazu, auch nicht zulassen oder nicht sinnvoll erscheinen lassen. Der Fahrer kann entscheiden, ob eine Schaltung noch sinnvoll ist oder nicht. Dementsprechend wird er sie zulassen, durch die Eingabe von Sprachbefehlen korrigieren oder verhindern.

Das Schalten von Übersetzungsstufen kann je nach Fahrzeugsituation sicherheitsrelevant sein. Schaltungen aufgrund von falscher Interpretation des Spracherkennungssystems, beispielsweise durch Gespräche der Mitfahrer oder sonstige Umgebungsgeräusche wie Straßengeräusche oder Radiogeräusche müssen deshalb zuverlässig ausgeschlossen sein. Es muß vermieden werden können, daß ein Mitfahrer einen unangebrachten Sprachbefehl abgeben kann, der zu einem gefährlichen Eingriff in die Fahrzeugsteuerung wird. Deshalb soll ein nur vom Fahrer erreichbares Bedienungselement vorgesehen sein, das die Eingabe von Sprachbefehlen zur Getriebesteuerung nur zeitweise freigibt. Dies kann ein Tippschalter sein, der bei seiner Betätigung die Befehlseingabe für die Getriebefunktionen für eine vorbestimmte oder programmierbare Zeitspanne freigibt.

Die Erfindung wird anhand einer Zeichnung näher erläutert.

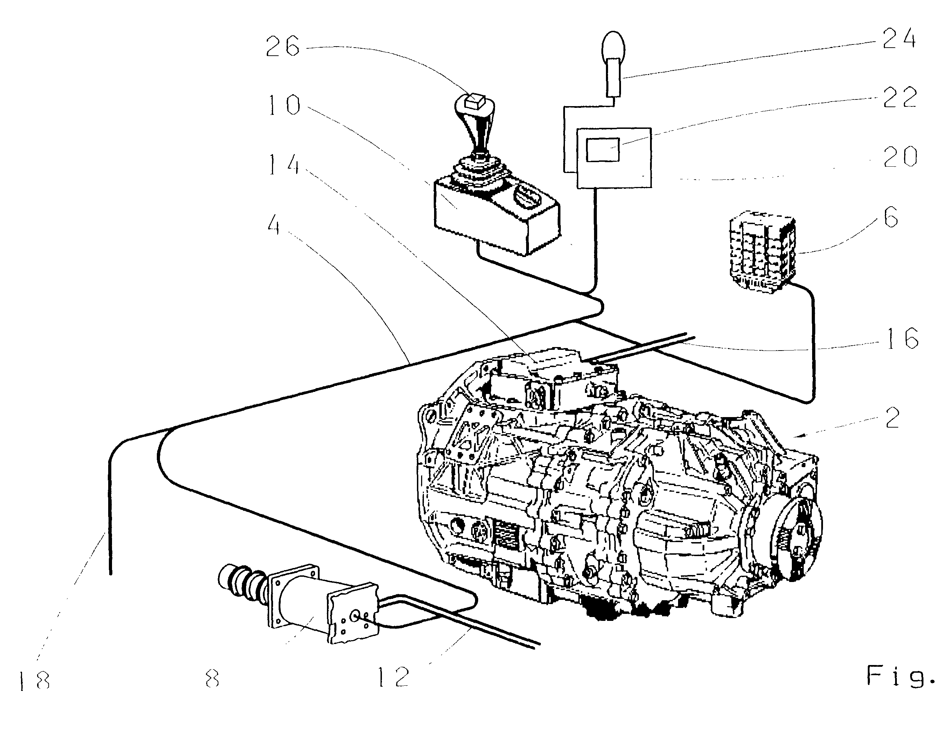

Die einzige Figur zeigt ein automatisiertes Getriebe 2, das über eine Steuerleitung 4, beispielsweise eine CAN-Bus-Leitung oder eine sonstige Kommunikationsbus-Leitung mit einer Getriebesteuerung 6, einem Kupplungssteller 8 und einem Gangschalthebel 10 verbunden ist. Über die Leitung 16 wird Druckluft einem Getriebesteller 14 zugeführt und über die Leitung 12 wird Druckluft dem Kupplungssteller 8 zugeführt. Die Steuerleitung 4 ist an einer Schnittstelle 18 mit weiteren hier nicht gezeigten Elementen des Fahrzeugs verbunden, wie beispielsweise Motorelektronik (EDC), Motorbremse, ABS, ASR oder Retarder. Ebenfalls ist eine Einrichtung zur Spracheingabe 20 an die Steuerleitung 4 angeschlossen. In der Einrichtung 20 befindet sich ein Speicher 22 für Referenz-Sprachbefehle. Ein Mikrofon 24 zur Eingabe der Sprachbefehle durch den Fahrer ist mit der Einrichtung 20 verbunden. An dem Gangschalthebel 10 ist ein Knopf 26 vorgesehen, mit dem der Fahrer die Eingabe von Sprachbefehlen freigeben kann. Ein derartiger Knopf kann auch als Lenkstockhebel an einem hier nicht gezeigten Lenkrad vorgesehen sein. Der Knopf kann auch direkt am Lenkrad auf dessen Oberfläche oder im Griffbereich am Lenkradkranz angeordnet sein.

### Bezugszeichen

- 2: Getriebe
- 4: Steuerleitung
- 6: Getriebesteuerung
- 8: Kupplungssteller
- 10: Gangschalthebel
- 12: Leitung
- 14: Getriebesteller
- 16: Leitung
- 18: Schnittstelle
- 20: Einrichtung zur Spracheingabe
- 22: Speicher
- 24: Mikrofon
- 26: Knopf

## Patentansprüche

1. Vorrichtung zum Schalten eines automatischen oder automatisierten Fahrzeugwechselgetriebes (2) mit einer Einrichtung zur Spracheingabe (20) durch den Fahrer, in der die vom Fahrer eingegebenen Sprachbefehle mit in einem Speicher (22) abgelegten Referenz-Sprachbefehlen verglichen werden und daraus in einer Getriebesteuerung (6) Steuersignale gebildet werden, **dadurch gekennzeichnet, daß** in der Getriebesteuerung (6) die aus den Sprachbefehlen des Fahrers gebildeten Steuersignale den von der Getriebesteuerung (6) errechneten Schaltsignalen überlagert werden, um daraus einen situationsgerechten Schaltbefehl für das Fahrzeugwechselgetriebe (2) zu bilden und die von der Getriebesteuerung (6) errechneten Schaltsignale zu korrigieren.

2. Vorrichtung nach Anspruch 1, **dadurch gekennzeichnet,daß** über die Einrichtung zur Spracheingabe (20) die Anzahl der Gangsprünge beim Wechsel des Übersetzungsverhältnisses sowohl beim Hochschalten als auch beim Zurückschalten einzugeben sind.

3. Vorrichtung nach Anspruch 1 oder 2, **dadurch gekennzeichnet, daß** über die Einrichtung zur Spracheingabe (20) spezielle Fahrprogramme wie ökonomische oder sportliche Programme oder Winterprogramme einzugeben sind.

4. Vorrichtung nach einem der Ansprüche 1 bis 3, **dadurch gekennzeichnet, daß** über die Einrichtung zur Spracheingabe (20) der Befehl, das Kriechen des Fahrzeugs zu unterdrücken, einzugeben ist.

5. Vorrichtung nach einem der Ansprüche 1 bis 4, **dadurch gekennzeichnet, daß** über die Einrichtung zur Spracheingabe (20) der Befehl, das aktuell eingelegte Übersetzungsverhältnis beizubehalten, einzugeben ist.

6. Vorr!chtung nach einem der Ansprüche 1 bis 5, **dadurch gekennzeichnet, daß** über die Einrichtung zur Spracheingabe (20) eine gewünschte Anfahrübersetzung einzugeben ist.

7. Vorrichtung nach einem der Anspruche 1 bis 6, **dadurch gekenn-zeichnet, daß** für die Einrichtung zur Spracheingabe (20) eine Vorrichtung (26) vorgesehen ist, die für den Fahrer leicht zugänglich ist und mit der die Benutzung der Einrichtung zur Spracheingabe (20) freigegeben wird.

8. Vorrichtung nach Anspruch 7, **dadurch gekennzeichnet, daß** die Vorrichtung (26) die Spracheingabe für eine vorbestimmbare Zeitspanne freigibt.

9. Vorrichtung nach Anspruch 7 oder 8, **dadurch gekennzeichnet,daß** die Vorrichtung (26) während der Fahrt ausschließlich für den Fahrer zugänglich ist.

10. Verfahren zum Schalten eines automatischen oder automatisierten Fahrzeugwechselgetriebes (2), bei dem in einer Einrichtung zur Spracheingabe (20) durch den Fahrer die von ihm eingegebenen Sprachbefehle mit in einem Speicher (22) abgelegten Referenz-Sprachbefehlen verglichen werden und daraus in einer Getriebesteuerung (6) Steuersignale gebildet werden, **dadurch gekennzeichnet,daß** in der Getriebesteuerung (6) die aus den Sprachbefehlen des Fahrers gebildeten Steuersignale den von der Getriebesteuerung (6) errechneten Schaltsignalen überlagert werden, um daraus einen situationsgerechten Schaltbefehl für das Fahrzeugwechselgetriebe (2) zu bilden und die von der Getriebesteuerung (6) errechneten Schaltsignale zu korrigieren.

## Claims

1. The invention relates to a device for controlling an automatic or automated vehicle variable-speed transmission (2) comprising hardware for voice entry (20) by the driver, in which the driver's commands are compared with reference commands stored in a memory (22) and whereby this comparison results in the generation of control signals in a transmission control unit (6), **characterized in that** the control signals generated in the transmission control unit (6) from the driver's commands are superimposed onto the shift signals calculated by the transmission control unit (6) in order to generate a situation-related shift command for the vehicle variable-speed transmission (2) and to correct the shift signals calculated by the transmission control unit (6).

2. A device in accordance with claim 1, **characterized in that** the hardware for voice entry (20) is used to input the number of gear steps during ratio change when changing up and when changing down.

3. A device in accordance with claim 1 or claim 2, **characterized in that** the hardware for voice entry (20) is used to input specific driving programs, i.e. economic, sporty or winter programs.

4. A device in accordance with any of the claims 1-3, **characterized in that** the hardware for voice entry (20) is used to input the commend to suppress crawling of the vehicle.

5. A device in accordance with any of the claims 1-4, **characterized in that** the hardware for voice entry (20) is used to input the command to maintain the current ratio.

6. A device in accordance with any of the claims 1-5, **characterized in that** the hardware for voice entry (20) is used to input the starting ratio desired.

7. A device in accordance with any of the claims 1-6, **characterized in that** the hardware for voice entry (20) is equipped with a device (26) which is in easy reach of the driver and is used to enable use of the hardware for voice entry (20).

8. A device in accordance with claim 7, **characterized in that** the device (26) enables voice input for a preset period of time.

9. A device in accordance with claim 7 or 8, **characterized in that** in the moving vehicle the device (26) is accessible by the driver only.

10. Method for controlling an automatic or automated vehicle variable-speed transmission (2) comprising hardware for voice entry by the driver (20), in which the driver's commands are compared with reference commands stored in a memory (22) and whereby this comparison results in the generation of control signals in a transmission control unit (6), **characterized in that** the control signals generated in the transmission control unit (6) from the driver's commands are superimposed onto the shift signals calculated by the transmission control unit (6) in order to generate a situation-related shift command for the vehicle variable-speed transmission (2) and to correct the shift signals calculated by the transmission control unit (6).

## Revendications

1. Dispositif de changement de vitesses pour une boîte automatique ou automatisée d'un véhicule automobile (2) doté d'un équipement pour l'entrée vocale (20) d'ordres par le conducteur, sachant que les ordres vocaux introduits par le conducteur sont comparés à des ordres vocaux de référence stockés dans une mémoire (22) pour en former dans le calculateur de la boîte de vitesses (6) des signaux pilote, **caractérisé en ce que** dans le calculateur de la boîte de vitesses (6) les signaux pilote, formés à partir des ordres vocaux introduits par le conducteur, sont superposés aux signaux de changement de vitesses calculés par le calculateur de la boîte de vitesses (6), pour en former un ordre de changement de vitesses pour la boîte du véhicule automobile (2) adapté à la situation de conduite et pour corriger les signaux de changement de vitesses calculés par le calculateur de la boîte de vitesses (6).

2. Dispositif selon la revendication 1, **caractérisé en ce que** au moyen de l'équipement pour l'entrée vocale (20) il faudra introduire le nombre de sauts de vitesses lors du changement de rapports de démultiplication, et cela soit pour les passages montants soit pour les passages descendants.

3. Dispositif selon une des revendications 1 ou 2, **caractérisé en ce que** au moyen de l'équipement pour l'entrée vocale (20) il faudra introduire des programmes de conduite spéciaux, comme par exempta des programmes économiques ou sportifs ou des programmes hiver.

4. Dispositif selon une des revendications de 1 à 3, **caractérisé en ce que** au moyen de l'équipement pour l'entrée vocale (20) il faudra introduire l'ordre d'inhibition de la vitesse extra-lente du véhicule.

5. Dispositif selon une des revendications de 1 à 4, **caractérisé en ce que** au moyen de l'équipement pour l'entrée vocale (20) il faudra introduire l'ordre de maintien du rapport de démultiplication sélectionné à un moment donné.

6. Dispositif selon une des revendications de 1 à 5, **caractérisé en ce que** au moyen de l'équipement pour l'entrée vocale (20) il faudra introduire un rapport de démultiplication au démarrage souhaité.

7. Dispositif selon une des revendications de 1 à 6, **caractérisé en ce que** en tant que équipement pour l'entrée vocale (20) il faudra prévoir un dispositif (26) étant facilement accessible au conducteur et permettant d'autoriser l'utilisation de l'équipement pour effectuer l'entrée vocale (20).

8. Dispositif selon la revendication 7, **caractérisé en ce que** l'équipement (26) autorise l'entrée vocale pour une période prédéterminée.

9. Dispositif selon la revendication 7, **caractérisé en ce que**, pendant la marche, l'équipement (26) est exclusivement accessible au conducteur.

10. Méthode pour le changement de vitesses sur une boîte de vitesses automatique ou automatisée d'un véhicule automobile (2) selon laquelle, dans un équipement pour l'entrée vocale (20) par le conducteur, les ordres vocaux introduits par le conducteur sont comparés à des ordres vocaux de référence stockés dans une mémoire (22) pour en former dans le calculateur de la boîte de vitesses (6) des signaux pilote, **caractérisé en ce que** dans le calculateur de la boîte de vitesses (6) les signaux pilote formés à partir des ordres vocaux introduits par le conducteur sont superposés aux signaux de changement de vitesses calculés par le calculateur de la boîte de vitesses (6), pour en former un ordre de changement de vitesses dans la boîte du véhicule automobile (2) adapté à la situation de conduite et pour corriger les signaux de changement de vitesses calculés par le calculateur de la boîte de vitesses (6).
